# EUROPÄISCHE PATENTSCHRIFT

(11) **EP 0 891 906 B1**
(45) Veröffentlichungstag und Bekanntmachung des Hinweises auf die Patenterteilung: **19.12.2001**
(21) Anmeldenummer: 98117980.7
(22) Anmeldetag: 16.10.1993
(51) Int. Cl.: B60T 13/68, B60T 13/57

(54) **Unterdruckbremskraftverstärker für Kraftfahrzeuge**
Vacuum brake booster for motor vehicles
Amplificateur de force de freinage à vide pour véhicules automobiles

(30) Priorität: 13.11.1992 DE 4238333; 23.07.1993 DE 4324688
(43) Veröffentlichungstag der Anmeldung: 20.01.1999
(62) Teilanmeldung aus: 95110878.6
(73) Patentinhaber: Continental Teves AG & Co. oHG, 60488 Frankfurt (DE)
(72) Erfinder: HARTH, Ralf, 64297 Darmstadt (DE); VON HAYN, Holger, 61118 Bad Vilbel (DE); SCHONLAU, Jürgen, 65396 Walluf (DE); ZINGEL, Heinz, 65520 Bad Camberg (DE); RITTER, Wolfgang, 61440 Oberursel/Ts. (DE)
(74) Vertreter: Dusil, Vladimir, Dipl.-Ing.

(56) Entgegenhaltungen:
- EP-A- 0 140 187
- EP-A- 0 478 396
- US-A- 4 608 825

## Beschreibung

Die Erfindung betrifft einen Unterdruckbremskraftverstärker für Kraftfahrzeuge mit einem Verstärkergehäuse, dessen Innenraum durch eine bewegliche Wand in eine Unterdruckkammer und eine Arbeitskammer unterteilt ist, sowie mit einem die bewegliche Wand tragenden Steuergehäuse, in dem ein eine auf die bewegliche Wand einwirkende Druckdifferenz steuerndes Steuerventil angeordnet ist, das mindestens zwei mit einem elastischen Ventilkörper zusammenwirkende Dichtsitze aufweist, und einerseits durch eine Betätigungsstange und andererseits unabhängig von der Betätigungsstange durch einen Elektromagneten betätigbar ist, dessen Anker kraftübertragend mit einem der Dichtsitze zusammenwirkt, wobei elektrische Schaltmittel vorgesehen sind, deren Steuersignale ein Abschalten der Stromzufuhr des Elektromagneten ermöglichen.

Ein derartiger Unterdruckbremskraftverstärker ist z.B. aus der europäischen Patentanmeldung 0 478 396 A1 bekannt. Der Elektromagnet, der den Dichtsitz betätigt, dessen Abheben vom Ventilkörper eine Belüftung der Arkeitskammer ermöglicht, ist bei einer Ausführung des darin gezeigten Bremskraftverstärkers außerhalb des Steuergehäuses auf der Betätigungsstange angeordnet. Für den Betrieb des vorbekannten Bremskraftverstärkers sind jedoch auch elektrische Schaltmittel erforderlich, die ein kontrolliertes Einleiten eines Fremdbremsvorgangs sowie dessen Unterbrechen bzw. Beenden ermöglichen. Dem Offenbarungsgehalt der erwähnten Veröffentlichung sind jedoch keine Angaben über die Anordnung bzw. die Art der Betätigung der elektrischen Schaltmittel zu entnehmen.

Es ist daher Aufgabe der vorliegenden Erfindung, Maßnahmen vorzuschlagen, die unter Beibehaltung der platzsparenden Bauweise eine aktive Überwachung des Betriebsmodus des Bremskraftverstärkers ermöglichen. Außerdem soll sichergestellt werden, daß die Fremdbetätigung des elektromagnetisch ansteuerbaren Bremskraftverstärkers, insbesondere nach einer bereits durchgeführten, fremdkraftunterstützten Bremsung, tatsächlich beendet wird.

Diese Aufgabe wird erfindungsgemäß dadurch gelöst, daß die Schaltmittel durch einen Mikroschalter sowie ein Betätigungselement gebildet sind, das mit einem verstärkergehäusefesten Anschlag zusammenwirkt.

Bei einer vorteilhaften Weiterbildung des Erfindungsgegenstandes liegt das Betätigungselement in der Lösestellung des Bremskraftverstärkers am Anschlag an.

Dabei ist es besonders vorteilhaft, wenn die Anlage des Betätigungselements am Anschlag ein Umschalten des Mikroschalters in eine erste Schaltstellung bewirkt bzw. wenn der Mikroschalter durch Abheben des Betätigungselements vom Anschlag in eine zweite Schaltstellung bringbar ist.

In der ersten Schaltstellung des Mikroschalters ist vorzugsweise die Stromzufuhr zum Elektromagneten unterbrochen, während in der zweiten Schaltstellung ein Bestromen des Elektromagneten erfolgen kann.

Eine besonders einfache Ausführung des Erfindungsgegenstandes zeichnet sich schließlich dadurch aus, daß der Anschlag durch einen radialen kragenartigen Bereich des Verstärkergehäuses gebildet ist.

Die Erfindung wird in der nachfolgenden Beschreibung an einem Ausführungsbeispiel im Zusammenhang mit der beiliegenden Zeichnung näher erläutert. In der Zeichnung zeigt:
- Fig. 1: eine Ausführung des erfindungsgemäßen Unterdruckbremskraftverstärkers im Längsschnitt, teilweise weggebrochen; und
- Fig. 2: die einzelnen Betätigungsphasen des in Fig. 1 dargestellten erfindungsgemäßen Unterdruckbremskraftverstärkers.

Das lediglich schematisch angedeutete Verstärkergehäuse 1 des in der Zeichnung dargestellten erfindungsgemäßen Unterdruckbremskraftverstärkers ist durch eine axial bewegliche Wand 2 in eine Arbeitskammer 3 und eine Unterdruckkammer 4 unterteilt. Die axial bewegliche Wand 2 besteht aus einem aus Blech tiefgezogenen Membranteller 8 und einer daran anliegenden flexiblen Membran 18, die nicht näher dargestellt zwischen dem äußeren Umfang des Membrantellers 8 und dem Verstärkergehäuse 1 eine Rollmembran als Abdichtung bildet.

Ein durch eine Betätigungsstange 7 betätigbares Steuerventil 12 ist in einem im Verstärkergehäuse 1 abgedichtet geführten, die bewegliche Wand 2 tragenden Steuergehäuse 5 untergebracht und besteht aus einem am Steuergehäuse 5 ausgebildeten ersten Dichtsitz 15, einem an einem mit der Betätigungsstange 7 verbundenen Ventilkolben 9 ausgebildeten zweiten Dichtsitz 16 sowie einem mit beiden Dichtsitzen 15,16 zusammenwirkenden Ventilkörper 10, der mittels einer sich an einem Haltering 21 abstützenden Ventilfeder 22 gegen die Ventilsitze 15,16 gedrückt wird. Die Arbeitskammer 3 ist mit der Unterdruckkammer 4 über einen seitlich im Steuergehäuse 5 verlaufenden Kanal 28 verbindbar.

Die Bremskraft wird über eine stirnseitig am Steuergehäuse 5 anliegende gummielastische Reaktionsscheibe 6 sowie eine einen Kopfflansch 23 aufweisende Druckstange 14 auf einen Betätigungskolben eines nicht dargestellten Hauptzylinders der Bremsanlage übertragen, der an der unterdruckseitigen, nicht gezeigten Verstärkergehäusehälfte angebracht ist.

Eine in der Zeichnung schematisch dargestellte Rückstellfeder 26, die sich an der unterdruckseitigen Stirnwand des Verstärkergehäuses 1 an einem nicht gezeigten Flansch abstützt, hält die bewegliche Wand 2 in der gezeigten Ausgangsstellung. Außerdem ist eine zweite Druckfeder 27 vorgesehen, die einerseits an der Betätigungsstange 7 und andererseits am Haltering 21 abgestützt ist und deren Kraft für eine Vorspannung des Ventilkolbens 9 bzw. seines Ventilsitzes 16 gegenüber dem Ventilkörper 10 sorgt.

Um die Arbeitskammer 3 bei der Betätigung des Steuerventils 12 mit der Atmosphäre verbinden zu können, ist schließlich im Steuergehäuse 5 ein annähernd radial verlaufender Kanal 29 ausgebildet. Die Rückkehrbewegung des Ventilkolbens 9 am Ende eines Bremsvorganges wird dabei durch ein Querglied 11 begrenzt, das in der in der Zeichnung gezeigten Lösestellung des Unterdruckbremskraftverstärkers an einem im Verstärkergehäuse 1 ausgebildeten Anschlag 38 anliegt.

Um eine von der Betätigungsstange 7 unabhängige Fremdbetätigung des erfindungsgemäßen Unterdruckbremskraftverstärkers einzuleiten ist radial zwischen dem ersten (15) und dem zweiten Dichtsitz 16 ein dritter Dichtsitz 24 vorgesehen, der mittels eines Elektromagneten 20 betätigbar ist, der vorzugsweise in einer axialen topfförmigen Verlängerung 25 des Ventilkolbens 9 angeordnet ist und demnach zusammen mit dem Ventilkolben 9 im Steuergehäuse 5 verschiebbar ist. Der Elektromagnet 20 besteht aus einer innerhalb der Verlängerung 25 angeordneten Spule 46 sowie einem darin verschiebbar angeordneten zylindrischen Anker 31, der einerseits innerhalb der Spule 46 und andererseis in einem die Verlängerung 25 verschließenden Verschlußteil 30 geführt wird. Eine Übertragung der vom Elektromagneten 20 aufgebrachten Fremdbetätigungskraft auf den dritten Dichtsitz 24 erfolgt mittels einer Kraftübertragungshülse 33, die am Anker 31 axial abgestützt ist und deren dem Anker 31 abgewandtes Ende den Dichtsitz 24 bildet.

Zwischen dem Ventilkolben 9 und der Kraftübertragungshülse 33 ist eine Druckfeder 40 angeordnet, die den Anker 31 in seiner Ausgangslage hält, in der der dritte Dichtsitz 24 gegenüber dem am Ventilkolben 9 ausgebildeten zweiten Dichtsitz 16 axial versetzt angeordnet ist. Das im Steuergehäuse 5 geführte Verschlußteil 30 liegt unter Zwischenschaltung einer Übersetzungscheibe 61 an der vorhin erwähnten Reaktionsscheibe 6 an und ermöglicht eine Übertragung der an der Betätigungsstange 7 eingeleiteten Eingangskraft auf die Reaktionsscheibe 6.

Bei der in der Zeichnung dargestellten Ausführung des erfindungsgemäßen Unterdruckbremskraftverstärkers sind schließlich elektrische Schaltmittel 55, 56 vorgesehen, die insbesondere bei Bremsvorgängen wichtig sind, bei denen zusätzlich zur Fahrerbetätigung der Elektromagnet 20 angesteuert wird, um unabhängig vom Fahrerwillen eine Vollbremsung herbeizuführen (sog. Bremsassistentfunktion). Dabei ist von besonderer Bedeutung, daß die Schaltmittel 55, 56 bei jeder Bremsung betätigt werden. Gleichzeitig muß gewährleistet werden, daß der Elektromagnet 20 nach Beendigung des fremdkraftunterstützten Bremsvorganges sicher abgeschaltet wird. Die gezeigten Schaltmittel bestehen dabei aus einem vorzugsweise am Ventilkolben 9 befestigten, zwei Schaltstellungen aufweisenden Mikroschalter 55 sowie einem den Mikroschalter 55 durch eine translatorische Bewegung betätigenden Betätigungselement 56, das in einer im Steuergehäuse 5 bzw. 67 vorgesehenen Bohrung abgedichtet geführt ist und mit einem verstärkergehäusefesten Anschlag zusammenwirkt, der das Bezugszeichen 58 trägt und beispielsweise durch einen radialen Kragen der hinteren Verstärkergehäuseschale gebildet sein kann. Zwischen dem Betätigungselement 56 und dem Steuergehäuse 5 bzw. 67 ist eine Druckfeder 57 angeordnet, so daß das dem Mikroschalter 55 abgewandte Ende des Betätigungselements 56 unter einer Vorspannung am Anschlag 58 anliegt. Dabei ist es besonders vorteilhaft, wenn das Betätigungselement 56 durch zwei teleskopartig ineinander geführte Teile 59, 60 gebildet ist, die mittels einer zweiten Druckfeder 66 axial auseinander gedrückt werden. Das am Anschlag 58 anliegende Teil 59 besteht aus einem Betätigungsstößel, dessen Bewegung im Steuergehäuse 5 bzw. 67 mittels eines radialen Bundes 64 begrenzt wird, der mit einem im Steuergehäuse 5 bzw. 67 vorgesehenen Sprengring 65 zusammenwirkt. Das der Betätigung des Mikroschalters 55 dienende zweite Teil 60 ist in der Gestalt einer auf dem Betätigungsstößel 59 geführten, die zweite Druckfeder 66 aufnehmenden Hülse ausgeführt.

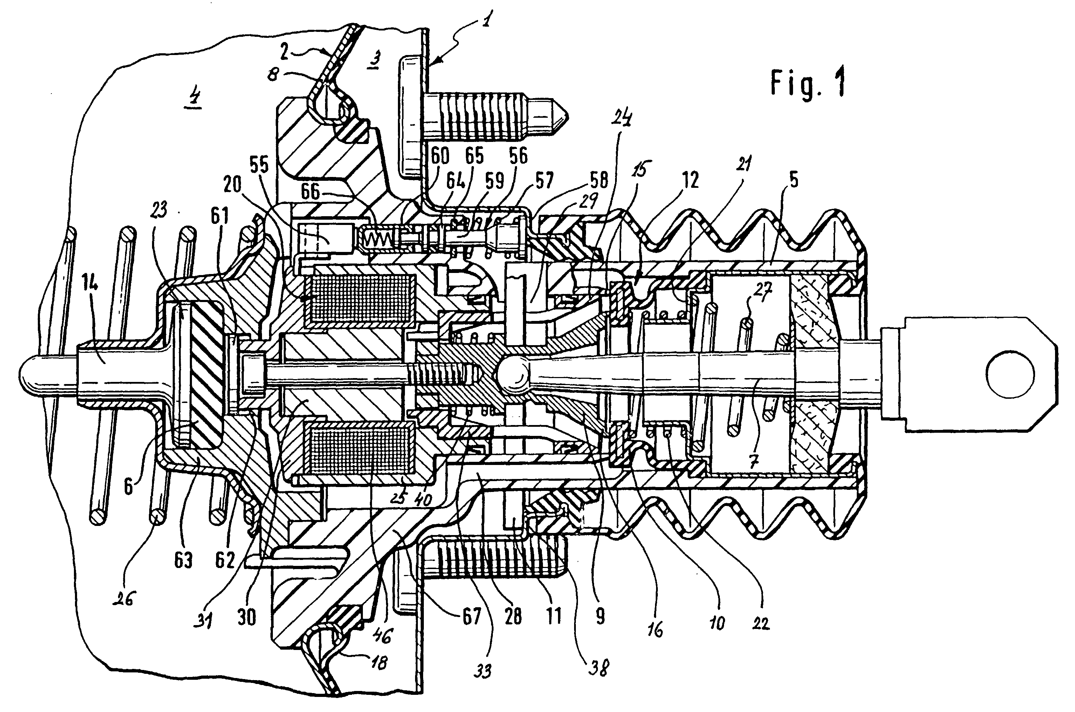

Wie der Fig. 1 schließlich zu entnehmen ist, ist das Steuergehäuse 5 der darin abgebildeten Verstärkerausführung zweiteilig ausgebildet und besteht aus einem im Verstärkergehäuse geführten, das Steuerventil 12 einschließlich des Elektromagneten 20 aufnehmenden Führungsteil 67, sowie einem mit dem Führungsteil 67 formschlüssig verbundenen Vorderteil 63. Die vorhin erwähnte übersetzungsscheibe 61 ermöglicht eine Addition der durch den Ventilkolben 9 vom Fahrer eingeleiteten Betätigungskraft zu der von der beweglichen Wand 2 aufgebrachten Verstärkungskraft. Die Bewegung der Übersetzungsscheibe 61 entgegen der Betätigungsrichtung wird durch eine im Vorderteil 63 ausgebildete Anschlag- bzw. Ringfläche 62 begrenzt, so daß bei Bedarf eine weitere Bewegung des Ventilkolbens 9 entgegen der Betätigungsrichtung möglich ist.

In der Lösestellung des erfindungsgemäßen Unterdruckbremskraftverstärkers nehmen seine Einzelteile die in Fig. 1 gezeigte Position ein. Durch die Anlage des Betätigungsstößels 59 am Anschlag 58 wird die Druckfeder 57 leicht zusammengedrückt, so daß zwischen dem Bund 64 und dem Sprengring 65 ein axialer Abstand bzw. Spiel vorhanden ist. Der Mikroschalter 55, der sich in seiner ersten Schaltstellung befindet, stützt sich an der Hülse 60 axial ab. Das Steuergehäuse 5 bzw. 67 sowie der Ventilkolben 9 schlagen über das Querglied 11 am Verstärkergehäuse an, während das Verschlußteil 30 des Ventilkolbens 9 an der Übersetzungsscheibe 61 anliegt, die ihrerseits sich im Abstand sowohl von der Anschlag- bzw. Ringfläche 62 als auch der Reaktionscheibe 6 befindet.

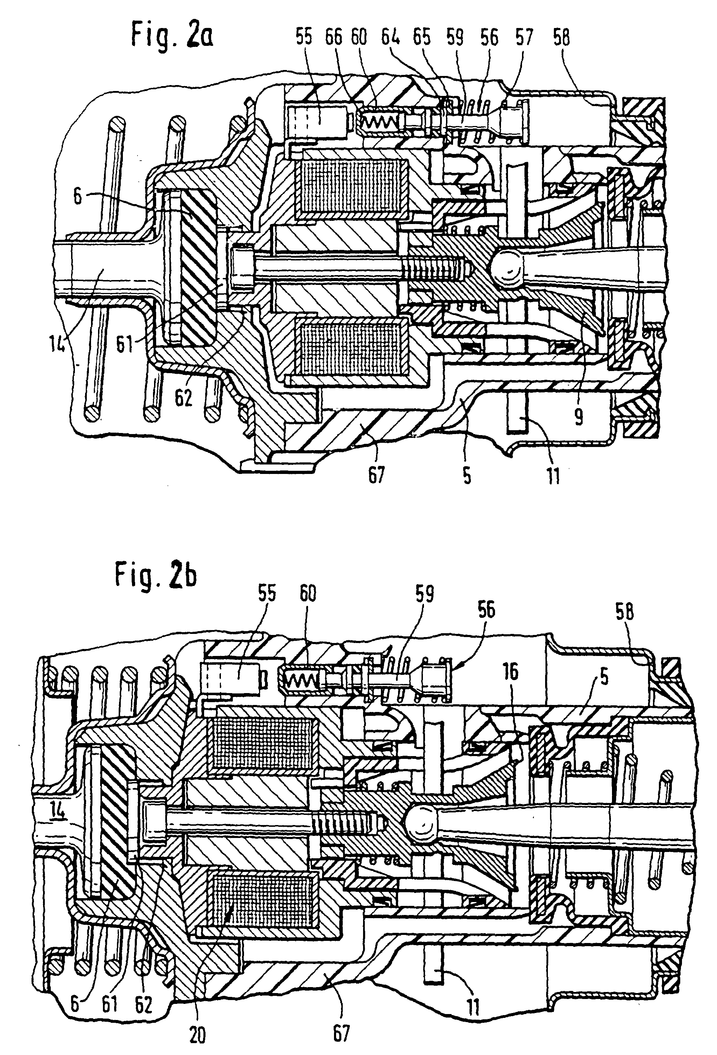

Wird nun vom Fahrer durch Betätigung des Ventilkolbens 9 eine Normal-(Teil-)Bremsung eingeleitet, so hebt der Ventilkolben 9 vom Querglied 11 ab, während die Übersetzungsscheibe 61 mit der Reaktionsscheibe 6 in Berührung gebracht wird (siehe Fig. 2a). Durch die Relativbewegung zwischen Ventilkolben 9 und Steuergehäuse 5 bzw. 67 entfernt sich der Mikroschalter 55 vom Betätigungselement 56, wodurch er in seine zweite Schaltstellung umgeschaltet wird. Der Schaltzustand des Mikroschalters 55 wird einer nicht gezeigten Steuerelektronik gemeldet, die der Ansteuerung des Elektromagneten 20 dient. Die Meldung dient bei nicht betätigtem Elektromagneten 20 einer Überprüfung der einwandfreien Funktion der Schaltmittel 55, 56. Durch Entlasten der Druckfeder 57 wird der Betätigungsstößel 59 so weit zurückgestellt, bis dessen Bund 64 am Sprengring 65 zur Anlage kommt. Gleichzeitig werden der Betätigungsstößel 59 und die Hülse 60 durch die zweite Druckfeder 66 auf Anschlag auseinandergedrückt.

Die vom Fahrer eingeleitete Vollbremsstellung ist in Fig. 2b gezeigt. Da sich der Mikroschalter 55 nach wie vor im Abstand von seinem Betätigungselement 56 bzw. 60 befindet, erfolgt keine Änderung seines Schaltzustandes, so daß er in der zweiten Schaltstellung verharrt. In der Vollbremsstellung kommt es lediglich zu einer Vergrößerung des Abstandes zwischen den Schaltmitteln 55, 56, wobei die Übersetzungsscheibe 61 in die gummielastische Reaktionsscheibe 6 hineingedrückt wird.

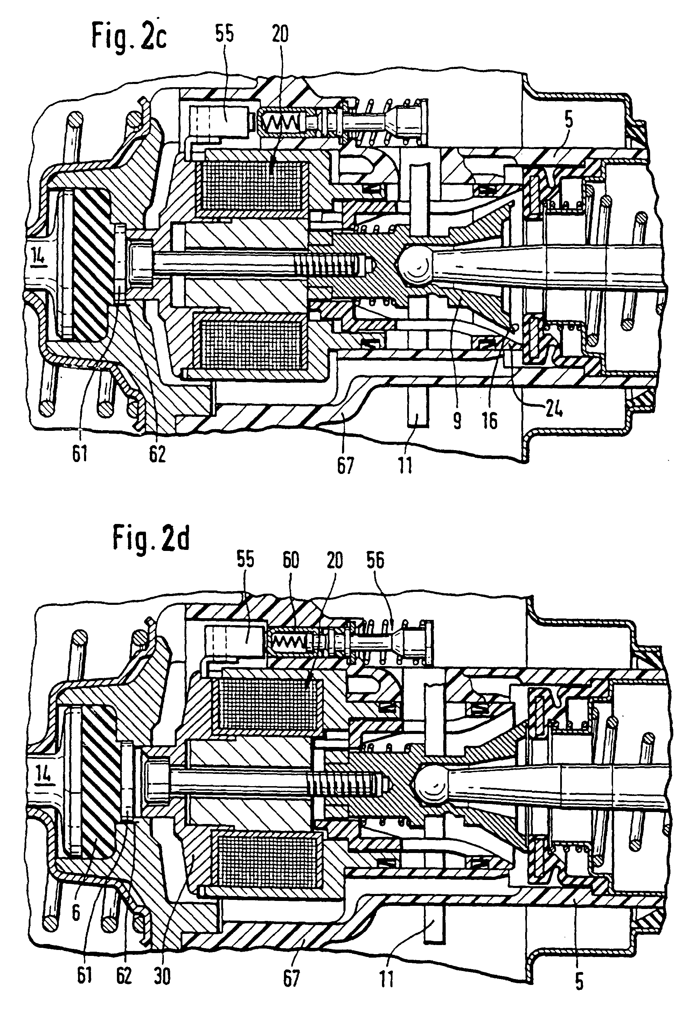

Fig. 2c zeigt eine Vollbremsstellung durch schnelle Fahrerbetätigung, die bei gleichzeitiger Ansteuerung des Elektromagneten 20 durch die nicht gezeigte Elektronik eingeleitet wurde. Durch die Relativbewegung des Ventilkolbens 9 gegenüber dem Steuergehäuse 5 bzw. 67 erfolgt ein Umschalten des Mikroschalters 55 in seine zweite Schaltstellung, das ein Aktivieren des Elektromagneten 20 ermöglicht. Durch die zusätzliche, durch weiteres Öffnen des am Ventilkolben 9 ausgebildeten (Atmosphären-)Dichtsitzes 16 auf Grund der Betätigung des dritten Dichtsitzes 24 bedingte Belüftung der Arbeitskammer 3 erfolgt ein Vorfahren des Steuergehäuses 5 gegenüber dem Ventilkolben 9, während dessen das Querglied 11 sich in einer Zwischenstellung befindet, in der keine Berührung zwischen ihm und dem Steuergehäuse 5 bzw. 67 stattfindet. Durch die Wirkung einer auf die Druckstange 14 einwirkenden Reaktionskraft wird die Reaktionsscheibe 6 in die die Übersetzungsscheibe 61 aufnehmende Ausnehmung im Steuergehäuse-Führungsteil 67 so lange hineingedrückt, bis die Übersetzungsscheibe 61 an der Ringfläche 62 anschlägt. Durch den Anschlag der Übersetzungsscheibe 61 wird die Übertragung der Reaktionskraft auf den Ventilkolben 9 verhindert, so daß am Betätigungs- bzw. Bremspedal keine Reaktionskraft mehr spürbar ist.

Bei einem langsam verlaufenden Lösevorgang (Wegnahme der Betätigungskraft) erfolgt ein Umschalten des Mikroschalters 55 erst bei Anlage des Betätigungselementes 56 bzw. 59 am Anschlag 58 (Fig. 1.)

Bei schnell verlaufendem Lösevorgang bzw. einer Wegnahme der Betätigungskraft während einer durch Ansteuern des Elektromagneten 20 eingeleiteten Vollbremsung (Fig. 2d) erfolgt ein Umschalten des Mikroschalters 55 in die erste Schaltstellung durch seine Anlage am Betätigungselement 56 bzw. 60. Der Umschaltvorgang wird der bereits erwähnten Elektronik gemeldet, die ein Steuersignal erzeugt, das ein Abschalten des Elektromagneten 20 zur Folge hat. Das Steuergehäuse 5 bzw. 67 wird von dem daran anliegenden Querglied 11 mitgenommen, während die Übersetzungsscheibe 61 durch das fließende Material der Reaktionsscheibe 6 gegen die Anschlag- bzw. Ringfläche 62 gedrückt wird. Der axiale Abstand zwischen dem Ende des Ventilkolbens 9 bzw. 30 und der Übersetzungsscheibe 61 entspricht dem Lösehub, der für den Lösevorgang des Bremsgerätes aus der durch den Elektromagneten 20 eingesteuerten Vollbremsung erforderlich ist.

### Bezugszeichenliste:

- 1: Verstärkergehäuse
- 2: bewegliche Wand
- 3: Arbeitskammer
- 4: Unterdruckkammer
- 5: Steuergehäuse
- 6: Reaktionsscheibe
- 7: Betätigungsstange
- 8: Membranteller
- 9: Ventilkolben
- 10: Ventilkörper
- 11: Querglied
- 12: Steuerventil
- 13 14: Druckstange
- 15: Dichtsitz
- 16: Dichtsitz
- 17 18: Rollmembran
- 19 20: Elektromagnet
- 21: Haltering
- 22: Ventilfeder
- 23: Kopfflansch
- 24: Dichtsitz
- 25: Verlängerung
- 26: Rückstellfeder
- 27: Kolbenstangenrückholfeder
- 28: Kanal
- 29: Kanal
- 30: Verschlußteil
- 31: Anker
- 32 33: Kraftübertragungshülse
- 34 35 36 37 38: Anschlag
- 39 40: Feder
- 41 42 43 44 45 46: Spule
- 47 48 49 50 51 52 53 54 55: Mikroschalter
- 56: Betätigungselement
- 57: Druckfeder
- 58: Anschlag
- 59: Betätigungsstößel
- 60: Hülse
- 61: Übersetzungsscheibe

- 62: Ringfläche
- 63: Vorderteil
- 64: Bund
- 65: Sprengring
- 66: Druckfeder
- 67: Führungsteil

## Patentansprüche

1. Unterdruckbremskraftverstärker für Kraftfahrzeuge mit einem Verstärkergehäuse (1), dessen Innenraum durch eine bewegliche Wand (2) in eine Unterdruckkammer (4) und eine Arbeitskammer (3) unterteilt ist, sowie mit einem die bewegliche Wand (22) tragenden Steuergehäuse (5), in dem ein eine auf die bewegliche Wand (2) einwirkende Druckdifferenz steuerndes Steuerventil (12) angeordnet ist, das mindestens zwei mit einem elastischen Ventilkörper (10) zusammenwirkende Dichtsitze (15,16,24) aufweist, und einerseits durch eine Betätigungsstange (7) und andererseits unabhängig von der Betätigungsstange (7) durch einen Elektromagneten (20) betätigbar ist, dessen Anker (31) kraftübertragend mit einem der Dichtsitze (15,16,24) zusammenwirkt, wobei elektrische Schaltmittel (55,56) vorgesehen sind, deren Steuersignale ein Abschalten der Stromzufuhr des Elektromagneten (20) ermöglichen, **dadurch gekennzeichnet, daß** die Schaltmittel (55,56) durch einen Mikroschalter (55) sowie ein Betätigungselement (56) gebildet sind, das mit einem verstärkergehäusefesten Anschlag (58) zusammenwirkt.

2. Unterdruckbremskraftverstärker nach Anspruch 1, **dadurch gekennzeichnet, daß** das Betätigungselement (56) in der Lösestellung des Bremskraftverstärkers am Anschlag (58) anliegt.

3. Unterdruckbremskraftverstärker nach Anspruch 2, **dadurch gekennzeichnet, daß** die Anlage des Betätigungselements (56) am Anschlag (58) ein Umschalten des Mikroschalters (55) in eine erste Schaltstellung bewirkt.

4. Unterdruckbremskraftverstärker nach einem der Ansprüche 1 bis 3, **dadurch gekennzeichnet, daß** der Mikroschalter (55) durch Abheben des Betätigungselements (56) vom Anschlag (58) in eine zweite Schaltstellung bringbar ist.

5. Unterdruckbremskraftverstärker nach einem der Ansprüche 2 bis 4 **dadurch gekennzeichnet, daß** in der ersten Schaltstellung des Mikroschalters (55) die Stromzufuhr zum Elektromagneten (20) unterbrochen ist.

6. Unterdruckbremskraftverstärker nach einem der Ansprüche 2 bis 4 **dadurch gekennzeichnet, daß** in der zweiten Schaltstellung des Mikroschalters (55) ein Bestromen des Elektromagneten (20) erfolgen kann.

7. Unterdruckbremskraftverstärker nach einem der Ansprüche 1 bis 6 **dadurch gekennzeichnet, daß** der Anschlag (58) durch einen radialen kragenartigen Bereich des Verstärkergehäuses (1) gebildet ist.

## Claims

1. Vacuum brake power booster for automotive vehicles having a booster housing (1) whose interior is subdivided into a vacuum chamber (4) and a working chamber (3) by a movable wall (2), further including a control housing (5) carrying the movable wall (2) and accommodating a control valve (12) which controls the pressure differential that acts upon the movable wall (2), the control valve including at least two sealing seats (15, 16, 24) which cooperate with an elastic valve member (10), and being operable by an actuating rod (7), on the one hand, and irrespective of the actuating rod (7) by an electromagnet (20), on the other hand, the armature (31) of the electromagnet being in a force-transmitting interaction with one of the sealing seats (15, 16, 24), wherein electrical switching means (55, 56) are provided and the control signals of which permit disconnecting the current supply to the electromagnet (20),
**characterized in that** the switching means (55, 56) is a microswitch (55) and an actuating element (56) which cooperates with a stop (58) on the booster housing.

2. Vacuum brake power booster as claimed in claim 1,
**characterized in that** the actuating element (56) bears against the stop (58) in the release position of the brake force booster.

3. Vacuum brake power booster as claimed in claim 2,
**characterized in that** the abutment of the actuating element (56) on the stop (58) causes a changeover of the microswitch (55) into a first operating position.

4. Vacuum brake power booster as claimed in any one of claims 1 to 3,
**characterized in that** the microswitch (55) can be moved to adopt a second operating position by the actuating element (56) lifting from the stop (58).

5. Vacuum brake power booster as claimed in any one of claims 2 to 4,
**characterized in that** the current supply to the electromagnet (20) is interrupted in the first operating position of the microswitch (55).

6. Vacuum brake power booster as claimed in any one of claims 2 to 4,
**characterized in that** energization of the electromagnet (20) can be effected in the second operating position of the microswitch (55).

7. Vacuum brake power booster as claimed in any one of claims 1 to 6,
**characterized in that** the stop (58) is formed of a radial collar-like area of the booster housing (1).

## Revendications

1. Amplificateur de frein à dépression pour véhicules automobiles, comportant un boîtier (1) d'amplificateur, dont l'espace intérieur est divisé par une paroi mobile (2) en une chambre à dépression (4) et une chambre de travail (3), et comportant un boîtier de commande (5), qui porte la paroi mobile (22) et dans lequel est disposée une soupape de commande (12), qui commande une différence de pression agissant sur la paroi mobile (2) et qui comporte au moins deux sièges d'étanchéité (15, 16, 24), qui coopèrent avec un corps élastique de soupape (10) et peut être actionné d'une part par une tige d'actionnement (7) et d'autre part, indépendamment de la tige d'actionnement (7), par un électroaimant (20), dont l'armature (31) coopère, en réalisant une transmission de force, avec l'un des sièges d'étanchéité (15, 16, 24), et dans lequel il est prévu des moyens électriques de commutation (55, 56), dont les signaux de commande permettent une interruption de l'alimentation en courant de l'électroaimant (20), **caractérisé en ce que** les moyens de commutation (55, 56) sont formés par un micro-interrupteur (55) ainsi que par un élément d'actionnement (56), qui coopère avec une butée (58) solidaire du boîtier de l'amplificateur.

2. Amplificateur de frein à dépression selon la revendication 1, **caractérisé en ce que**, lorsque l'amplificateur de frein est dans la position relâchée, l'élément d'actionnement (56) s'applique contre la butée (58).

3. Amplificateur de frein à dépression selon la revendication 2, **caractérisé en ce que** l'application de l'élément d'actionnement (56) contre la butée (58) provoque une commutation du micro-interrupteur (55) dans une première position de commutation.

4. Amplificateur de frein à dépression selon l'une des revendications 1 à 3, **caractérisé en ce que** le micro-interrupteur (55) peut être amené dans une seconde position de commutation sous l'effet de l'écartement de l'élément d'actionnement (56) par rapport à la butée (58).

5. Amplificateur de frein à dépression selon l'une des revendications 2 à 4, **caractérisé en ce que** lorsque le micro-interrupteur (55) est dans la première position de commutation, l'alimentation en courant de l'électroaimant (20) est interrompue.

6. Amplificateur de frein à dépression selon l'une des revendications 2 à 4, **caractérisé en ce que** lorsque le micro-interrupteur (55) est dans la seconde position de commutation, une alimentation en courant de l'électroaimant (20) peut être réalisée.

7. Amplificateur de frein à dépression selon l'une des revendications 1 à 6, **caractérisé en ce que** la butée (58) est formée par une partie radiale en forme de collet du boîtier (1) de l'amplificateur.
